# EUROPÄISCHE PATENTANMELDUNG

(11) **EP 0 600 205 A1**
(43) Veröffentlichungstag der Anmeldung: **08.06.1994**
(21) Anmeldenummer: 93116917.1
(22) Anmeldetag: 20.10.1993
(51) Int. Cl.: C09D 11/16

(54) **Schillernde Tinte**

(30) Priorität: 01.12.1992 DE 4240366
(71) Anmelder: ROTRING INTERNATIONAL GMBH & Co KG, D-22525 Hamburg (DE)
(72) Erfinder: Piel, Merten, D-22769 Hamburg (DE)
(74) Vertreter: UEXKÜLL & STOLBERG

(57) **Zusammenfassung**

Die Erfindung betrifft eine Tintenzusammensetzung auf Wasserbasis, die als Färbemittel ein Perlglanzpigment umfaßt und eine Viskosität kleiner als 12 mPas (bei 25°C) aufweist. Der Gehalt an Perlglanzpigment liegt im Bereich von 0,5 bis 25 Gew.-% und der Wassergehalt liegt im Bereich von 55 bis 95 Gew.-%. Die Tintenzusammensetzung kann weitere übliche Zusatzstoffe umfassen. Umfaßt ist ferner ein Verfahren zur Herstellung der Tintenzusammensetzung Schreibgeräte und ihre Verwendung in Schreibgeräten wie Füllfederhaltern oder Röhrchenfüllern.

## Beschreibung

Die Erfindung betrifft eine Tintenzusammensetzung auf Wasserbasis, die als Färbemittel Perlglanzpigment umfaßt. Insbesondere betrifft die Erfindung eine Tintenzusammensetzung für Schreibgerate wie Füllfederhalter oder Röhrchenfüller.

Die bisher bekannten Tinten und Druckfarben, die Perlglanzpigmente enthalten, sind für die Verwendung in Schreibgeräten, die enge Austrittsöffnungen, dünne Kapillaren oder Röhrchen aufweisen wie Füllfederhalter und Röhrchenfüller nicht geeignet. So ist beispielsweise aus der US-A-3 631 135 eine wäßrige Siebdruckfarbe zum Bedrucken von Kunststoffteilen aus Melaminharz bekannt, die 25 bis 50 Gew.-% Perlglanzpigment, Bindemittel und Verdicker enthält. Eine solche Siebdruckfarbe ist relativ viskos (ca. 100 mPas) und außerdem strukturviskos, um erst durch Rakeldruck durch das Sieb zu gelangen. Sie ist jedenfalls nicht geeignet, aus Füllfederhaltern oder Röhrchenfüllern verschrieben zu werden. Ferner sind aus der EP-A-0 321 739 spezielle Perlglanzpigmente sowie deren Verwendung in Druckfarben bekannt. Druckfarben sind jedoch wie bereits oben dargelegt, zu viskos, als daß sie mit Schreibgeräten mit feinen Kapillaren verschrieben werden können. Ferner sind Tinten mit Silber- oder Gold-Effekten für Markerstifte bekannt. Diese beinhalten jedoch vielfach organische Lösungsmittel in großen Mengen und zur Erzeugung des Silber- oder Gold-Effekts elementares Metall umfassende Pigmente. Aufgrund des Gehalts an elementarem Metall ist beim Einsatz in überwiegend oder ausschließlich wäßrigen Medien mit Korrosionsproblemen zu rechnen.

Die der Erfindung zugrundeliegende Aufgabe besteht darin, eine Tintenzusammensetzung zur Verfügung zu stellen, die aus Schreibgeräten mit engen Austrittsöffnungen auf das zu beschreibende Substrat aufgebracht werden können, einen schillernden/irisierenden Farbauftrag ergeben und auf Wasser basieren. Gleichzeitig sollen die bei bekannten Tinten und Druckfarben auftretenden Nachteile vermieden werden.

Die erfindungsgemäße Aufgabe wird durch eine Tintenzusammensetzung auf Wasserbasis gelöst, die als Färbemittel Perlglanzpigment umfaßt und dadurch gekennzeichnet ist, daß sie eine Viskosität kleiner als 12 mPas (bei 25°C) aufweist und 0,5 - 25 Gew.-% Perlglanzpigment, 55 - 95 Gew.-% Wasser und gegebenenfalls weitere übliche Zusatzstoffe umfaßt.

Bevorzugte Ausführungsformen sind Gegenstand der Unteransprüche.

Überraschenderweise läßt sich die erfindungsgemäße Tintenzusammensetzung dauerhaft verschreiben, obwohl in der Regel davon ausgegangen wird, daß Pigmente wie die verwendeten Perlglanzpigmente aus kapillaren Tintenleitsystemen aufgrund von Verstopfungen nicht dauerhaft verschreibbar sind und daß Pigmente, die wie die Perlglanzpigmente schnell sedimentieren, nicht zu einem einheitlichen Schriftbild führen können.

Es hat sich jedoch gezeigt, daß auch bei niedrigviskosen Tinten, d.h. ohne die sonst übliche Stabilisierung der Pigmente durch hohe Viskosität, Thixotropierung usw., bei Verwendung solcher Pigmente nicht nur ein einheitliches Schriftbild möglich ist, sondern sich auch randscharfe und sehr feine Linien ergeben können. Die anhaltende Verschreibbarkeit der Pigmente beruht wahrscheinlich auf der reversiblen Flockulationsfähigkeit des gebildeten Sedimentbodensatzes.

Je nach Betrachtungswinkel der erzeugten Farbaufträge ergeben sich unterschiedliche Farbtöne, die schillernd bzw. irisierend erscheinen. Falls es gewünscht ist, können auch Linien erzeugt werden, die in der Mitte andersfarbig sind als an den Rändern. Dieser Effekt kann beispielsweise durch die gezielte Einstellung des Breitlaufverhaltens durch beispielsweise Tensidzusatz erzielt werden.

Die erfindungsgemäße Tintenzusammensetzung weist im allgemeinen eine Viskosität kleiner als 12 mPas (bei 25°C) auf. Vorzugsweise liegt die Viskosität im Bereich von 1 bis 10 mPas (bei 25°C) und besonders bevorzugt im Bereich von 1 bis 5 mPas (bei 25°C).

Der Gehalt der Tintenzusammensetzung an Perlglanzpigment beträgt im allgemeinen 0,5 bis 25 Gew.-%, liegt vorzugsweise im Bereich von 1 bis 20 Gew.-% und insbesondere im Bereich von 1 bis 10 Gew.-%, wobei ein Bereich von 1 bis 5 Gew.-% besonders bevorzugt ist. Die erfindungsgemäße Tintenzusammensetzung auf Wasserbasis umfaßt ferner im allgemeinen 55 bis 95 Gew.-% Wasser und vorzugsweise 75 bis 90 Gew.-% Wasser, wobei auch 0,5 bis 20 Gew.-% mit Wasser mischbare organische Lösungsmittel vorhanden sein dürfen. Bei diesen Lösungsmitteln handelt es sich insbesondere um Glycerin, Ethandiol, Propan-1,2-diol und Ethanol.

Das erfindungsgemäß verwendete Perlglanzpigment kann metallisch oder nicht-metallisch sein, ist aber vorzugsweise nicht-metallisch. Geeignete Perlglanzpigmente bestehen aus Glimmer, der mit einem oder mehreren Metalloxiden beschichtet ist oder aus Fisch-silber. Geeignete Metalloxide sind beispielsweise TiO, TiO₂ oder Mischformen derselben und FeO, Fe₂O₃, Fe₃O₄ oder Mischformen derselben, sowie ZnO. Beispielsweise kann das Perlglanzpigment aus mit TiO₂ beschichtetem Glimmer oder aus mit TiO₂ und einem Eisenoxid beschichteten Glimmer bestehen.

Das Perlglanzpigment ist vorzugsweise blattförmig und weist einen durchschnittlichen Teilchendurchmesser kleiner als 60 µm und vorzugsweise kleiner als 20 µm auf.

Die Tintenzusammensetzung kann neben dem Perlglanzpigment und der Wasserbasis auch andere für Tinten übliche Zusatzstoffe umfassen. Hierzu gehören beispielsweise weitere Pigmente, wasserlösliche Farbstoffe, mit Wasser mischbare organische Lösungsmittel, Dispergiermittel, wasserlösliche Bindemittel, pH-Regulatoren, Konservierungsmittel, Tenside und sonstige weitere Hilfsmittel. Die von Perlglanzpigment verschiedenen weiteren Pigmenten können in einer Menge von 0,5 bis 10 Gew.-%, die wasserlöslichen Farbstoffe in einer Menge von 0,1 bis 10 Gew.-%, die mit Wasser mischbaren organischen Lösungsmittel in einer Menge von 0,5 bis 20 Gew.-%, die Dispergiermittel in einer Menge von 0,1 bis 5 Gew.-%, die wasserlöslichen Bindemittel in einer Menge von 0,5 bis 20 Gew.-%, die pH-Regulatoren in einer Menge von 0,1 bis 2 Gew.-%, die Konservierungsmittel in einer Menge von 0,01 bis 0,5 Gew.-%, die Tenside in einer Menge von 0,001 bis 5 Gew.-% und die weiteren Hilfsmittel in einer Menge von 0,1 bis 10 Gew.-% vorhanden sein. Von diesen üblichen Zusatzstoffen können einer oder mehrere gleichzeitig vorhanden sein.

Die weiteren Pigmente können beispielsweise Pigment Black 7 oder Pigment Blue 15:3 sein. Als wasserlösliche Farbstoffe eignen sich insbesondere Acid Blue 9, Acid Red 52, Acid Yellow 23 und Direct Black 19. Die verwendbaren Dispergiermittel umfassen insbesondere Polyacrylate und geeignete Bindemittel sind Polyvinylalkohol (PVA) und Polyvinylpyrrolidon (PVP). Als pH-Regulatoren kommen Zitronensäure und Triethanolamin in Frage, wobei Zironensäure bevorzugt ist. K-Sorbat und p-Chlor-m-Kresol sind Konservierungsmittel, die in der erfindungsgemäßem Tintenzusammensetzung eingesetzt werden können. Verbindungen wie Polyglykoletherderivate und Laurylethersulfate sind Beispiele für brauchbare Tenside. Als weiteres Hilfsmittel kommt Harnstoff in Betracht.

Die Tinte kann aufgrund ihrer niedrigen Viskosität durch enge Öffnungen, dünne Kapillaren oder Röhrchen auf das zu beschreibende Substrat aufgetragen werden. Insbesondere kann sie deshalb in Schreibgeräten wie Füllfederhaltern oder Röhrchenfüllern Einsatz finden.

Um bei Gebrauch eine gute und schnelle Verteilung der Pigmentteilchen in der Tinte zu erreichen, kann die Tinte auch kleine inerte Mischkügelchen umfassen. Der Durchmesser der Mischkügelchen liegt im Bereich von 0,5 bis 3 mm, wobei ein Durchmesser von 0,8 mm bevorzugt ist. In der Praxis können solche Mischkügelchen beispielsweise in Tintenpatronen vorhanden sein, wobei pro Tintenpatrone in der Regel 1 bis 3 Mischkügelchen ausreichen. Die Mischkügelchen bestehen aus inertem Material und vorzugsweise aus Zirkoniumdioxid oder Glas. Durch die Mischkügelchen wird der Vorgang der Deflockulierung des abgesetzten Perlglanzpigments während der Ruhelage des Schreibgeräts (Flockulation und Bildung eines weichen Bodensatzes) aufgrund der sehr leichten Scherung wie beispielsweise durch zweimaliges Schütteln, wieder ausreichend feinverteilt.

Die beschriebene Tintenzusammensetzung kann hergestellt werden, indem die einzelnen Bestandteile in beliebiger Reihenfolge, wobei vorzugsweise das Wasser vorgelegt wird und gegebenenfalls leicht erwärmt wird, miteinander vermischt werden.

Im folgenden sind Beispiele für erfindungsgemäße Tintenzusammensetzungen aufgeführt.

### Beispiel 1 (Blau schillernd)

| | Gew.-% |
|---|---|
| Deionisiertes Wasser | 88,8 |
| Iriodin 123 * | 3 |
| Duasyn Säureblau AE 85 (Acid Blue 9) | 1 |
| Glycerin | 2 |
| Harnstoff | 1 |
| Zitronensäure | 1 |
| K-Sorbat | 0,1 |
| Luviskol K30 (PVP) (Viskosität 10 mPas (bei 25°C) bei 15°C in Wasser) | 3 |
| Nonylphenolpolyglykolether (95% Ethylenoxid, Igepal CO 990 (Tensid)) | 0,1 |

| | |
|---|---|
| * Iriodin 123: Glimmer mit TiO₂ und ZnO beschichtet | |

### Beispiel 2 (Silbrig, insbesondere für schwarzes Papier)

| | Gew.-% |
|---|---|
| Deionisiertes Wasser | 86,8 |
| Iriodin 123 * | 5 |
| Glycerin | 2 |
| Harnstoff | 1 |
| Zitronensäure | 1 |
| K-Sorbat | 0,1 |
| Luviskol K30 (PVP) | 4 |
| Igepal CO 990 (Tensid) | 0,1 |

| | |
|---|---|
| * Iriodin 123: Glimmer mit TiO₂ und ZnO beschichtet | |

### Beispiel 3 (Goldtinte)

| | Gew.-% |
|---|---|
| Deionisiertes Wasser | 87,8 |
| Iriodin 323 | 4 |
| Farbstoff-Kombination (goldgelb) | 1 |
| Glycerin | 2 |
| Harnstoff | 1 |
| Zitronensäure | 1 |
| K-Sorbat | 0,1 |
| Luviskol K30 (PVP) | 3 |
| Igepal CO 990 (Tensid) | 0,1 |

| | |
|---|---|
| * Iriodin 323: Glimmer mit TiO₂ und Eisenoxid beschichtet Goldsatin Das Serum (gelöste Bestandteile) hat die gleiche Frabe wie das Perlglanzpigment, wodurch sich ein besonders intensives Gold ergibt. | |

Es kann auch eine Kombination aus 95 Gew.-% Brillanttinte, schwarz, und 5 Gew.-% Iriodin 110 (Perlglanzpigment, Glimmer mit TiO2 beschichtet) eingesetzt werden. Hierbei ergibt sich eine silbergraue Tinte.

## Patentansprüche

1. Tintenzusammensetzung auf Wasserbasis, die als Färbemittel Perlglanzpigment umfaßt, dadurch gekennzeichnet, daß sie eine Viskosität kleiner als 12 mPas (bei 25°C) aufweist und
0,5 - 25 Gew.% Perlglanzpigment,
55 - 95 Gew.% Wasser und
gegebenenfalls weitere übliche Zusatzstoffe umfaßt.

2. Tintenzusammensetzung nach Anspruch 1, dadurch gekennzeichnet, daß sie eine Viskosität im Bereich von 1 - 10 mPas (bei 25°C) aufweist.

3. Tintenzusammensetzung nach Anspruch 1 oder 2, dadurch gekennzeichnet, daß sie eine Viskosität im Bereich von 1 - 5 mPas (bei 25°C) aufweist.

4. Tintenzusammensetzung nach einem der Ansprüche 1 bis 3, dadurch gekennzeichnet, daß sie 1 - 20 Gew.% Perlglanzpigment umfaßt.

5. Tintenzusammensetzung nach Anspruch 4, dadurch gekennzeichnet, daß sie 1 - 10 Gew.% Perlglanzpigment umfaßt.

6. Tintenzusammensetzung nach Anspruch 4 oder 5, dadurch gekennzeichnet, daß sie 1 - 5 Gew.% Perlglanzpigment umfaßt.

7. Tintenzusammensetzung nach einem der vorhergehenden Ansprüche, dadurch gekennzeichnet, daß sie 75 - 90 Gew.% Wasser umfaßt.

8. Tintenzusammensetzung nach einem der vorhergehenden Ansprüche, dadurch gekennzeichnet, daß das Perlglanzpigment blattförmig ist, wobei der durchschnittliche Teilchendurchmesser kleiner als 60 µm ist.

9. Tintenzusammensetzung nach Anspruch 8, dadurch gekennzeichnet, daß der Teilchendurchmesser kleiner als 20 µm ist.

10. Tintenzusammensetzung nach einem der vorhergehenden Ansprüche, dadurch gekennzeichnet, daß das Perlglanzpigment aus Glimmer, der mit Metalloxid beschichtet ist, oder aus Fisch-silber besteht.

11. Tintenzusammensetzung nach Anspruch 10, dadurch gekennzeichnet, daß das Metalloxid TiO, TiO₂ oder Mischformen derselben und/oder FeO, Fe₂O₃, Fe₃O₄ oder Mischformen derselben ist.

12. Tintenzusammensetzung nach einem der vorhergehenden Ansprüche, dadurch gekennzeichnet, daß die üblichen Zusatzstoffe 0,5 bis 10 Gew.% weitere Pigmente, 0,1 bis 10 Gew.% wasserlösliche Farbstoffe, 0,5 bis 20 Gew.% mit Wasser mischbare organische Lösungsmittel, 0,1 bis 5 Gew.% Dispergiermittel, 0,5 bis 20 Gew.% wasserlösliche Bindemittel, 0,1 bis 2 Gew.% pH-Regulatoren, 0,01 bis 0,5 Gew.% Konservierungsmittel, 0,001 bis 5 Gew.% Tenside und/oder 0,1 bis 10 Gew.% weitere Hilfsmittel umfassen.

13. Tintenzusammensetzung nach einem der vorhergehenden Ansprüche, dadurch gekennzeichnet, daß sie außerdem kleine inerte Mischkügelchen umfaßt.

14. Tintenzusammensetzung nach Anspruch 13, dadurch gekennzeichnet, daß die Mischkügelchen einen Durchmesser von 0,5 bis 3 mm aufweisen.

15. Tintenzusammensetzung nach Anspruch 13 oder 14, dadurch gekennzeichnet, daß die Mischkügelchen einen Durchmesser von 0,8 mm aufweisen.

16. Tintenzusammensetzung nach einem der Ansprüche 13 bis 15, dadurch gekennzeichnet, daß in einer Tintenpatrone 1 bis 3 Mischkügelchen vorhanden sind.

17. Tintenzusammensetzung nach einem der Ansprüche 13 bis 16, dadurch gekennzeichnet, daß die Mischkügelchen aus Zirkoniumdioxid oder Glas bestehen.

18. Verfahren zur Herstellung der Tintenzusammensetzung gemäß einem der Ansprüche 1 bis 17, dadurch gekennzeichnet, daß die Bestandteile in beliebiger Reihenfolge gegebenenfalls unter Erwärmen miteinander vermischt werden.

19. Verwendung einer Tintenzusammensetzung gemäß einem der Ansprüche 1 bis 17 in Vorrichtungen, bei den die Tintenzusammensetzung durch enge Öffnungen, dünne Kapillaren oder Röhrchen auf das zu beschreibende Substrat aufgetragen wird.

20. Verwendung nach Anspruch 19, dadurch gekennzeichnet, daß die Vorrichtung ein Füllfederhalter oder ein Röhrchenfüller ist.
